# EUROPEAN PATENT SPECIFICATION

(11) **EP 3 774 644 B1**
(45) Date of publication and mention of the grant of the patent: **30.10.2024**
(21) Application number: 19716141.7
(22) Date of filing: 04.04.2019
(51) Int. Cl.: C01B 3/26, C01B 32/05

(54) **PYROLYSIS OF METHANE WITH A MOLTEN SALT BASED CATALYST SYSTEM**
PYROLYSE VON METHAN MIT EINEM KATALYSATORSYSTEM AUF SALZSCHMELZEBASIS
PYROLYSE DE MÉTHANE AVEC UN SYSTÈME DE CATALYSEUR À BASE DE SEL FONDU

(30) Priority: 09.04.2018 US 201862654587 P
(43) Date of publication of application: 17.02.2021
(73) Proprietor: Shell Internationale Research Maatschappij B.V., 2596 HR The Hague (NL)
(72) Inventor: SPANU, Leonardo, Houston, TX 77082-3101 (US); MESTERS, Carolus Matthias Anna Maria, Houston, TX 77082-3101 (US)
(74) Representative: Shell Legal Services IP
(86) International application number: PCT/EP2019/058453
(87) International publication number: WO 2019/197256

(56) References cited:
- WO-A1-2018/141911
- US-A- 4 665 261
- US-A- 5 767 165
- US-A1- 2017 217 772

## Description

### Field of the Invention

This invention relates to catalyst systems for methane pyrolysis.

### Background of the Invention

In the methane pyrolysis reaction, methane decomposes into gaseous hydrogen and solid carbon, eliminating therefore the need of CO and CO₂ separation units for the product stream. The solid carbon can be sold as a commercial product for selected applications, depending on the carbon morphology and physical/chemical properties. It would be desirable to develop a process that is optimized to produce both gaseous hydrogen and solid carbon products with controlled morphology and functionalities. To be commercially viable the process should have a high methane conversion to avoid costly separations between unconverted methane and hydrogen, and it should provide control of the carbon morphology for specific applications. Control of the carbon morphology can be achieved via chemical vapor deposition (CVD) methods. With a CVD method, a catalyst, which may be a metal, is exposed to gaseous hydrocarbons to produce high quality carbon materials on the catalyst surface. Supported metal catalysts can be employed in fluidized bed (FB-CVD) reactors, a suitable reactor concept for large-scale operation. Methane conversion in a FB-CVD reactor are usually lower than 40%, while higher conversion rates are achieved at the expense of the catalyst stability and life-time (Hazzim F.Abbas & W.M.A.Wan Daud, "Hydrogen Production by Methane Decomposition: A Review", Int. J. Hydrogen Energy 35(8), 2010, pages1160-1190). FB-CVD methods require catalyst separation from the carbon products and regeneration, and these methods are affected by unwanted carbon deposition on the reactor wall. Higher conversion levels in a FB-CVD could be achieved with catalysts with a short life time, but this would require more catalyst-carbon separations.

WO 2018/141911 is an earlier filed but non-prepublished patent application which relates to a process to convert hydrocarbons into hydrogen and a separate carbon phase. In step a) the hydrocarbons are contacted with a molten salt, preferably comprising zinc chloride, at temperatures preferably above 500°C. In step b) a solid or liquid carbon phase is separated from the molten salt at a lower temperature, preferably below 150°C.

US 2017/217772 discloses a method of producing elemental carbon and hydrogen by reacting at least one molten metal with at least one hydrocarbon.

US 5 767 165 relates to a method for the production of methanol.

US 4 665 261 discloses a method for conversion of methane to higher hydrocarbons.

Methane pyrolysis in a liquid metal bubble column (M. Steinberg, "Fossil Fuel Decarbonization Technology for Mitigating Global Warming", Int. J. Hydrogen Energy 24 (8), 1999, pages 771-777) has been reported achieving high methane conversion, but so far there are no examples of catalytic systems or processes to control the final carbon morphology during methane pyrolysis in a molten bath. Methane pyrolysis in a molten media offers superior heat management and temperature control. In addition, methane decomposition in a molten media prevents the deposition of solid carbon layers on the reactor wall, the primary cause of reactor plugging. It would be beneficial therefore to identify a molten media based catalyst that would promote the reaction of methane into hydrogen at high conversion while controlling the morphology of the carbon products.

### Summary of the Invention

The invention provides a catalyst system, which is active in pyrolyzing methane at reaction temperatures above 700°C, comprising a molten salt selected from the group consisting of the halides of alkali metals; the halides of alkaline earth metals; the halides of copper, manganese, cadmium, tin and iron; and mixtures thereof, the molten salt having dispersed therein one or more catalytically active forms of iron, molybdenum, manganese, nickel, cobalt, titanium, and copper in the form of finely dispersed particles elemental metals, metal oxides, metal carbides or mixtures thereof.

The invention further provides a process comprising passing methane through a reaction zone comprising the aforementioned catalyst system, under reaction conditions to produce a gas stream comprising hydrogen and a solid carbon product. Further embodiments are disclosed in dependent claims 2 to 5 and 7.

### Detailed Description of the Invention

The high temperature methane pyrolysis catalyst systems according to the invention are heterogeneous systems comprising a molten salt which melts below 1000°C, but is stable under methane pyrolysis reaction conditions at temperatures above 700°C, preferably about 700° to about 1050°C, and which contains a uniform dispersion of a finely divided metal, metal oxide and/or metal carbide of certain metallic species which exhibit catalytic activity for methane pyrolysis and which can control the nucleation and growth of selected carbon structures.

The molten salt is present in the reaction zone at a temperature above its melting point. To function as an effective carrier in the heterogeneous catalyst system it is essential that the molten salt be thermally and chemically stable under pyrolytic reaction conditions. That is, the molten salt cannot be reduced by the reactant feed mixture under the conditions prevailing in the reaction zone. The salt is a superior heat transfer media, allowing for an accurate control of the temperature required the synthesis of defined carbon morphologies control. In addition, the selection of the salt could influence the carbon morphology.

Suitable metal salts or salt mixtures may be alkali halides or alkaline earth halides. The molten salts preferably comprise lithium chloride, sodium chloride, potassium chloride, cesium chloride, magnesium chloride, calcium chloride, strontium chloride, barium chloride or mixtures thereof. Preferred molten salts have a high thermal conductivity and a high density compared to carbon.

The molten salt has dispersed therein one or more catalytically active metals comprising iron, molybdenum, nickel, cobalt or copper in the form of finely dispersed particles as metals, metal oxides and/or carbides. The average size of the metal particles can vary from 1 nm to 0.5 mm and the size is selected to improve the methane conversion and to control the final carbon morphology. The average particles size and particle size distribution is critical to control the shape of the carbon products. Metals like iron, cobalt, and nickel can be selected to promote the formation of tube-like structures, for example, carbon fibers and carbon nanotubes. For iron, cobalt, and nickel the preferred average particles size is between 1nm to 15nm. Copper promotes the formation of carbon morphologies with predominant planar carbon structures.
The weight concentration of the active metal catalyst in the molten salts can vary from about 0.1 wt% to 20 wt%. The active catalysts may be prepared by simple physical comminution of the metal catalysts, in the form of relatively pure elemental metals, metal carbides or metal oxides, to the desired particle size; e.g., hammer mill grinding, and subsequent addition of the ground metal, metal carbides or metal oxide powder to the salt carrier before or after heating to, or above, its melting point. For those skilled in the art, metal catalysts can be prepared via different approaches such as co-precipitation or hydrothermal synthesis. Alternatively, the active metal catalysts can be prepared via the decomposition of a chemical compound or complex containing the metal and be introduced into the reactor as a gaseous species and/or a solid. The decomposition of the chemical compounds into the desired catalyst can take place in the reactor at temperatures between 350 and 1000 °C. In one embodiment, the thermally and/or chemically decomposable metal compound is added to the salt after the salt has been melted and the molten salt mixture has been agitated to allow a uniform metal dispersion. In another embodiment, the gaseous metal precursor such as metallocene is continuously fed into the molten salt mixtures during the pyrolysis reaction, allowing for a continuous release of the active metals during the methane pyrolysis reaction.

The invention provides a process to produce hydrogen and carbon materials of selected morphologies from methane by passing methane through a reaction zone at temperature from 700 to 1200 °C comprising a molten salt with finely dispersed metal-containing catalysts particles. The gas stream that is fed to the reaction zone comprises methane, hydrogen and other hydrocarbons in an amount not larger than 10% in volume. In addition, the feed may comprise one or more inert gases, for example, nitrogen. The feed may be added at the bottom of the bed and the reaction may be carried out as the feed passes through the molten salt bed. In prior art processes, significant problems were seen due to the deposition of solid carbon layers on the reactor walls. The use of a molten salt bed where the solid carbon is formed in the bed prevents this carbon deposition on the walls. The reaction may be carried out in any suitable reactor vessel. The feed is injected into the reaction zone and bubbles up through the molten salt bed. The methane is decomposed inside of the bubbles as they rise in the reactor. When the bubbles reach the surface, the hydrogen, carbon and any unreacted methane is released. The hydrogen and unreacted methane are removed as a gas stream and the solid carbon product remains at the surface.

In some embodiments, additional separation steps may be needed to separate the solid carbon product from the molten salt/metal bed. Another important feature of the reactor is that it needs to be resistant to corrosion caused by the high temperature salt or metal. In one embodiment, the reactor may be a packed column.

The reaction is carried out at a temperature in the range of from 600 to 1300 °C, preferably from 700 to 1200 °C. For those skilled in the art, it is evident that the methane conversion is limited to thermodynamic constraints depending on the temperature, pressure and feed composition. The catalyst and process conditions are preferably selected to provide a conversion of methane in the range of from 50 wt.% to the thermodynamic limitation, preferably of from 75 wt.% to the thermodynamic limitation. The methane conversion may be from 50 wt.% to 100 wt.%, preferably from 75 wt.% to 100 wt.%.

The reaction zone produces a solid carbon product and a gas stream comprising hydrogen. The gas stream may comprise at least 50 vol% hydrogen, preferably at least 75 vol% hydrogen and more preferably at least 90 vol% hydrogen. In this reaction zone, carbon dioxide is not formed, so there is no need to separate carbon dioxide from the hydrogen before it can be used in other reactions. In addition to hydrogen in the gas stream, any unreacted methane will not negatively impact most downstream processes, including ammonia synthesis. This provides an advantage over other hydrogen production processes, for example, steam methane reforming which does produce carbon dioxide. The solid carbon product has a lower density than the molten salt, so the solid carbon product stays at the top of the molten salt bed which makes separation easier. The solid carbon product can be used as a raw material to produce color pigments, fibers, foil, cables, activated carbon or tires. In addition, the solid carbon product may be mixed with other materials to modify the mechanical, thermal, and/or electric properties of those materials. The final carbon morphology of the solid carbon product is controlled by the selection of the salts, dispersed metal-containing particles, and reaction conditions.

In addition to the hydrogen, the gas stream may additionally comprise unreacted methane. Due to the high conversion in this process step, the amount of unreacted methane is low, and if it is sufficiently low then a gas separation step to separate the methane from the hydrogen is not necessary. If a higher purity of hydrogen is required, pressure swing adsorption processes (PSA) can be used very efficiently because of the relatively low level of methane in the second gas stream.

## Claims

1. A catalyst system, which is active in pyrolyzing methane at reaction temperatures above 700°C, comprising a molten salt selected from the group consisting of the halides of alkali metals; the halides of alkaline earth metals; the halides of copper, manganese, cadmium, tin and iron; and mixtures thereof, the molten salt having dispersed therein one or more catalytically active forms of iron, molybdenum, manganese, nickel, cobalt, titanium, and copper in the form of finely dispersed particles as elemental metals, metal oxides, metal carbides or mixtures thereof.

2. The catalyst system of claim 1, wherein the molten salt melts below 1000°C.

3. The catalyst system of any of claims 1-2, wherein the molten salt melts between about 600°C and about 800°C.

4. The catalyst system of any of claims 1-3, wherein the average size of the dispersed catalytically active metal-containing particles is less than or equal to about 0.5mm.

5. The catalyst system of any of claims 1-4, wherein the concentration of catalytically active metal dispersed in the molten salt ranges from 0.1 to about 20% by weight of the total catalyst system.

6. A process comprising passing methane through a reaction zone comprising the catalyst system of any of claims 1-5, under reaction conditions to produce a gas stream comprising hydrogen and a solid carbon product.

7. The process of claims 6 wherein the reaction conditions comprise a temperature in the range of from 700 to 1300°C.

## Patentansprüche

1. Katalysatorsystem, das bei einem Pyrolysieren von Methan bei Reaktionstemperaturen über 700 °C aktiv ist, umfassend eine Salzschmelze, die aus der Gruppe ausgewählt ist, bestehend aus den Halogeniden von Alkalimetallen; den Halogeniden von Erdalkalimetallen; den Halogeniden von Kupfer, Mangan, Cadmium, Zinn und Eisen; und Mischungen davon, wobei die Salzschmelze darin dispergiert eine oder mehrere katalytisch aktive Formen von Eisen, Molybdän, Mangan, Nickel, Cobalt, Titan und Kupfer in der Form von fein verteilten Partikeln als elementare Metalle, Metalloxide, Metallcarbide oder Mischungen davon aufweist.

2. Katalysatorsystem nach Anspruch 1, wobei die Salzschmelze unter 1000 °C schmilzt.

3. Katalysatorsystem nach einem der Ansprüche 1 bis 2, wobei die Salzschmelze zwischen etwa 600 °C und etwa 800 °C schmilzt.

4. Katalysatorsystem nach einem der Ansprüche 1 bis 3, wobei die durchschnittliche Größe der dispergierten, katalytisch aktiven, metallhaltigen Partikel kleiner als oder gleich etwa 0,5 mm ist.

5. Katalysatorsystem nach einem der Ansprüche 1 bis 4, wobei die Konzentration von katalytisch aktivem Metall, das in der Salzschmelze dispergiert ist, von 0,1 bis etwa 20 Gew.-% des gesamten Katalysatorsystems reicht.

6. Verfahren, umfassend ein Leiten von Methan durch eine Reaktionszone, umfassend das Katalysatorsystem nach einem der Ansprüche 1 bis 5, unter Reaktionsbedingungen, um einen Gasstrom zu produzieren, umfassend Wasserstoff und ein festes Kohlenstoffprodukt.

7. Verfahren nach Anspruch 6, wobei die Reaktionsbedingungen eine Temperatur in dem Bereich von 700 bis 1300 °C umfassen.

## Revendications

1. Système catalytique, qui est actif dans la pyrolyse du méthane à des températures de réaction supérieures à 700 °C, comprenant un sel fondu choisi dans le groupe constitué des halogénures de métaux alcalins ; halogénures de métaux alcalino-terreux ; halogénures de cuivre, manganèse, cadmium, étain et fer ; et mélanges de ceux-ci, le sel fondu ayant dispersé dans celui-ci une ou plusieurs formes catalytiquement actives de fer, molybdène, manganèse, nickel, cobalt, titane et cuivre, sous forme de particules finement dispersées de métaux élémentaires, oxydes métalliques, carbures métalliques ou mélanges de ceux-ci.

2. Système catalytique selon la revendication 1, dans lequel le sel fondu fond en dessous de 1 000 °C.

3. Système catalytique selon l'une quelconque des revendications 1 à 2, dans lequel le sel fondu fond entre environ 600 °C et environ 800 °C.

4. Système catalytique selon l'une quelconque des revendications 1 à 3, dans lequel la taille moyenne des particules dispersées contenant des métaux catalytiquement actifs est inférieure ou égale à environ 0,5 mm.

5. Système catalytique selon l'une quelconque des revendications 1 à 4, dans lequel la concentration de métal catalytiquement actif dispersé dans le sel fondu est comprise entre 0,1 et environ 20 % en poids du système catalytique total.

6. Procédé comprenant le passage de méthane à travers une zone de réaction comprenant le système catalytique selon l'une quelconque des revendications 1 à 5, dans des conditions de réaction pour produire un courant gazeux comprenant de l'hydrogène et un produit carboné solide.

7. Procédé selon la revendication 6, dans lequel les conditions de réaction comprennent une température comprise entre 700 et 1 300 °C.
